# EUROPÄISCHE PATENTANMELDUNG

(11) **EP 4 223 115 A1**
(43) Veröffentlichungstag der Anmeldung: **09.08.2023**
(21) Anmeldenummer: 23155037.7
(22) Anmeldetag: 06.02.2023
(51) Int. Cl.: A01K 49/00, A01K 47/02

(54) **MODULARES BEUTENSYSTEM UND VERFAHREN ZUR ENTWICKLUNG UND FÜHRUNG EINES BIENENVOLKES**

(30) Priorität: 07.02.2022 DE 102022102801
(71) Anmelder: Beutling, Mirko, 16949 Triglitz/OT Silmersdorf (DE)
(72) Erfinder: Beutling, Mirko, 16949 Triglitz/OT Silmersdorf (DE)
(74) Vertreter: Andresen, Heiko

(57) **Zusammenfassung**

Es wird ein modulares Beutensystem zur Entwicklung und Führung eines Bienenvolkes angegeben. Das Beutensystem umfasst eine Mehrzahl von Beuten mit einem Innenraum zur Aufnahme von Wabenrähmchen und eine Mehrzahl von Wabenrähmchen zum Ausbau einer Bienenwabe, wobei zumindest ein Teil der Wabenrähmchen miteinander verbunden und/oder verbindbar ist, um ein oder mehrere Mehrfachrähmchen mit einem vergrößerten Wabenmaß zu bilden. Die Wabenrähmchen umfassen mehrere Einzelrähmchen mit einem 1/3-Wabenmaß, sodass jeweils zwei der Einzelrähmchen zu einem Doppelrähmchen mit einem 2/3-Wabenmaß und jeweils drei der Einzelrähmchen zu einem Dreifachrähmchen mit einem 3/3-Wabenmaß miteinander verbunden und/oder verbindbar sind. Die Beuten umfassen eine Begattungseinheit, eine Entwicklungseinheit und eine Wirtschaftseinheit, deren Innenraum jeweils spezifisch an die Aufnahme der Einzel- Doppel- und Dreifachrähmchen angepasst ist.

## Beschreibung

### Gebiet der Erfindung

Die vorliegende Erfindung betrifft ein Beutensystem mit einer Mehrzahl von unterschiedlichen Beuten, auch als Bienenkästen bezeichnet, zur Aufnahme von Wabenrähmchen und einer Mehrzahl von Wabenrähmchen zum Ausbau einer Bienenwabe. Solche Beutensysteme werden in der Imkerei zur Königinnenzucht und Erneuerung eines Bienenvolkes eingesetzt. Des Weiteren betrifft die vorliegende Erfindung ein Verfahren zur Völkerführung bei der Vermehrung eines Bienenvolkes mithilfe eines modularen Beutensystems, sowie einen Bausatz für ein modulares Beutensystem.

### Hintergrund der Erfindung

Die gezielte Zucht von Königinnen der Honigbiene und die Entwicklung neuer Zuchtvölker ist ein wesentlicher Bestandteil der modernen Wirtschaftsimkerei. Nur eine regelmäßige Erneuerung eines Bienenvolkes mit jungen Königinnen etwa alle ein bis zwei Jahre gewährleistet einen stabilen Gesundheitszustand und kontinuierliche Leistungsstärke.

Neben der reinen Vermehrung liegt die Herausforderung in der Königinnenzucht dabei in der Beurteilung und gezielten Selektion geeigneten Zuchtmaterials. Eine frühzeitige Aussage über die Eigenschaften einer Bienenkönigin ist aus Zeit- und Kostengründen von sehr großer wirtschaftlicher Bedeutung.

Für die imkereiliche Königinnenzucht stehen sogenannte Begattungskästchen zur Verfügung. Dabei handelt es sich um kleinformatige Bienenkästen, die meist nur mit einem oder wenigen kleinen Wabenrähmchen ausgestattet sind. Die Begattungskästchen werden mit einer frisch geschlüpften Bienenkönigin oder schlupfreife Weiselzelle bestückt und zu einem geeigneten Begattungsplatz transportiert. Nach der Begattung ist es möglich, die Königin in dem Begattungskästchen zu einem kleinen Zuchtvolk heranzuziehen.

Aufgrund der geringen Brutraumgröße lässt sich in einem Begattungskästchen eine Königin mit ihrem wachsenden Jungvolk in der Regel nicht länger als etwa drei bis vier Wochen halten. Oft muss die Königin schon weniger als zwei Wochen nach dem Begattungsflug in eine größere Beute umgesiedelt werden, damit ihre Legeleistung bewertet werden kann.

Problematisch ist, dass die kleinen Wabenrähmchen herkömmlicher Begattungskästchen nicht mit dem sogenannten Standmaß kompatibel sind. Als "Standmaß" wird das Rahmenmaß der Bienenwaben von Bienenkästen bezeichnet, in denen sich die Nutz- bzw. Wirtschaftsvölker zur Honiggewinnung befinden. Gängige Standmaße sind z. B. das Deutsch-Normalmaß, Langstroth-Maß, Dadant-Maß bzw. Dadant US-Maß, Hoffmann-Maß, Schweizermaß und Zander-Maß. Das Umsiedeln der Bienenkönigin auf ein Standmaß ist daher nicht ohne Weiteres möglich. In der Regel muss die Königin zum Umsiedeln von ihrem eigenen Bienenvolk und der eigenen Brut getrennt und anschließend mit ihr fremden Bienen, z. B. in Form eines Kunstschwarms, in eine neue Beute mit Wabenrähmchen im Standmaß überführt werden. Dieses Verfahren ist zeitaufwändig und mit erheblichen Risiken für die Königinnen verbunden; die Verlustrate liegt üblicherweise bei 20-30%. Sofern die Königin von den fremden Bienen akzeptiert wird und überlebt, kommt es aufgrund des Verlustes von Bienen und Brut und der Störung der Königin oft zu einer Brutpause, welche den jungen Bienenstaat in seiner Entwicklung zurückwirft. Auf diese Weise gehen wertvolle Zeit und wertvolles Betriebskapital verloren.

Erschwerend kommt hinzu, dass die Eigenschaften von Bienenköniginnen und ihre Zuchtwürdigkeit aufgrund der äußeren Einflüsse beim Umsiedeln und Umweiseln, d. h. dem Einsetzen der Bienenkönigin ("Weisel") in ein bestehendes oder künstlich gebildetes Bienenvolk ("Kunstschwarm"), verfälscht werden können und sich somit zu diesem Zeitpunkt nicht objektiv miteinander vergleichen lassen. Erst, wenn ein reinrassiges Zuchtmaterial vorliegt, d. h. das heranwachsende Bienenvolk ausschließlich aus den Nachkommen der Königin besteht, können die Eigenschaften der Königinnen zuverlässig bewertet und gegebenenfalls eine Vorselektion getroffen werden. Dieser Zeitpunkt wird üblicherweise frühestens nach acht bis zehn Wochen, regelmäßig auch erst im Folgejahr erreicht.

In der DE 20 2009 007 551 U1 wird ein System mit einem Bienenkasten vorgeschlagen, der zur Aufnahme einer Wabe ausgebildet ist, die in ihren Abmessungen einem Teil eines Standmaßes entspricht. Mehrere dieser Waben können auf diese Weise mit geeigneten Vorrichtungen zu einer großen Bienenwabe im Standmaß verbunden werden, um die Umsiedelung eines heranwachsenden Bienenvolkes zu vereinfachen.

Mit den im Stand der Technik bekannten Systemen lassen sich die oben genannten Probleme nach wie vor aber nur teilweise lösen. Es ist daher eine Aufgabe der vorliegenden Erfindung, ein verbessertes Beutensystem und ein verbessertes Verfahren zur Entwicklung und Führung eines Bienenvolkes bereitzustellen.

Diese Aufgaben werden durch die Gegenstände der unabhängigen Ansprüche gelöst. Bevorzugte Ausführungsformen sind Gegenstände der abhängigen Ansprüche und der nachfolgenden Beschreibung.

### Beschreibung der Erfindung

Ein erster Aspekt der vorliegenden Erfindung betrifft ein modulares Beutensystem zu Entwicklung und Führung eines Bienenvolkes.

Ein gattungsgemäßes Beutensystem umfasst eine Mehrzahl von Beuten mit jeweils einem Boden, einem Deckel und einer zwischen dem Boden und dem Deckel angeordneten Wandung, die einen Innenraum, nachfolgend auch als Brutraum bezeichnet, zur Aufnahme von Wabenrähmchen rahmenförmig umgibt. Dabei ist vorgesehen, dass die Wabenrähmchen in dem Innenraum vertikal und im Wesentlichen parallel hintereinander entlang einer Längsachse des Innenraums angeordnet werden, d. h. die von den Wabenrähmchen umgebene Wabenfläche erstreckt sich im Wesentlichen normal zur Längsachse über zumindest einen Teil einer Querschnittsfläche des Innenraums.

Des Weiteren umfasst ein gattungsgemäßes Beutensystem eine Mehrzahl von Wabenrähmchen, die jeweils zum Ausbau einer Bienenwabe dienen. Zumindest ein Teil dieser Wabenrähmchen ist miteinander verbunden und/oder miteinander verbindbar, um auf diese Weise ein oder mehrere Mehrfachrähmchen zu bilden, die ein vergrößertes Wabenmaß aufweisen.

Die erfindungsgemäßen Wabenrähmchen umfassen hierbei mehrere Einzelrähmchen in einem 1/3-Wabenmaß, sodass jeweils zwei der Einzelrähmchen zu einem Doppelrähmchen, das dementsprechend ein 2/3-Wabenmaß aufweist, und jeweils drei der Einzelrähmchen zu einem Dreifachrähmchen, das dementsprechend ein 3/3-Wabenmaß aufweist, miteinander verbunden und/oder miteinander verbindbar sind.

Die erfindungsgemäßen Beuten umfassen eine Begattungseinheit, eine Entwicklungseinheit und eine Wirtschaftseinheit, wobei es sich jeweils um separate Bienenkästen handelt.

Der Innenraum der Begattungseinheit weist quer zur Längsachse eine Breite auf, die an die Aufnahme von genau einem der Einzelrähmchen angepasst ist. Vorzugsweise erstreckt sich das im Innenraum angeordnete Einzelrähmchen hierbei quer zur Längsachse über mindestens 70%, bevorzugt mindestens 80%, besonders bevorzugt mindestens 90% oder 95% der Querschnittsfläche des Innenraums.

Der Innenraum der Entwicklungseinheit weist quer zur Längsachse eine Breite auf, die an die Aufnahme von genau zwei der Einzelrähmchen, die zu dem Doppelrähmchen miteinander verbunden sind, angepasst ist. Vorzugsweise erstreckt sich das im Innenraum angeordnete Doppelrähmchen hierbei quer zur Längsachse über mindestens 70%, bevorzugt mindestens 80%, besonders bevorzugt mindestens 90% oder 95% der Querschnittsfläche des Innenraums.

Der Innenraum der Wirtschaftseinheit weist quer zur Längsachse eine Breite auf, die an die Aufnahme von genau drei der Einzelrähmchen, die zu dem Dreifachrähmchen miteinander verbunden sind, angepasst ist. Vorzugsweise erstreckt sich das im Innenraum angeordnete Dreifachrähmchen hierbei quer zur Längsachse über mindestens 70%, bevorzugt mindestens 80%, besonders bevorzugt mindestens 90% oder 95% der Querschnittsfläche des Innenraums.

Das erfindungsgemäße Beutensystem mit den drei hinsichtlich Wabenmaß und Brutraumgröße speziell aufeinander abgestimmten Beuten und Wabenrähmchen ermöglicht es, eine Bienenkönigin vollständig mit ihrer Brut und ihrem wachsenden Hofstaat aus eigenen Nachkommen von der Begattungseinheit über die Entwicklungseinheit bis hin zur Wirtschaftseinheit mit geringem zeitlichem und technischem Aufwand und damit einhergehend geringer Störung der Bruttätigkeit und des Wärmehaushalts im Bienenstock umzusiedeln. Beispielsweise können einfach zwei brutgefüllte Einzelrähmchen aus der Begattungseinheit miteinander oder jeweils mit einem weiteren Einzelrähmchen zum Doppelrähmchen verbunden und in die Entwicklungseinheit überführt werden. Brutgefüllte Doppelrähmchen aus der Entwicklungseinheit können mit jeweils einem weiteren Einzelrähmchen zum Dreifachrähmchen verbunden und in die Wirtschaftseinheit überführt werden.

Wesentlich für die Erfindung ist hierbei das Drittelverhältnis der Wabenmaße der Einheiten zueinander in Verbindung mit der Entwicklungseinheit, deren Brutraum ein Zwischenmaß zwischen den Bruträumen der Begattungseinheit und Vollbeute darstellt. Der Erfinder hat erkannt, dass diese spezielle Abstimmung von Waben- und Beutengröße der Physiologie und Dynamik eines heranwachsenden Bienenvolkes besonders entgegenkommt. Dadurch ist es möglich, dem Bienenvolk in jedem Entwicklungsstadium räumlich und klimatisch optimale Bedingungen zu bieten und gleichzeitig störende Eingriffe von außen zu minimieren. Da die Bienenkönigin mit ihrer eigenen Brut und ihrem eigenen Hofstaat schnell und schonend in einen Brutraum angepasster Größe umgesiedelt werden kann, wird das empfindliche Pheromongleichgewicht im Bienenstock nicht gestört und die Harmonie im Bienenvolk bleibt erhalten. Eine Einweiselung in ein Fremdvolk oder einen Kunstschwarm wird in jedem Entwicklungsstadium vollständig vermieden. Es hat sich gezeigt, dass sich die Verlustrate von Bienenköniginnen auf diese Weise regelmäßig auf unter 5%, oft auch auf unter 3% oder sogar unter 1% reduzieren lässt.

Zugleich lassen sich Brutpausen der Bienenköniginnen und äußere Einflüsse auf deren Zuchteigenschaften wirksam vermeiden, die im Stand der Technik beispielsweise durch die Einweiselung der Bienenköniginnen in einen Kunstschwarm und/oder die direkte Umsiedlung eines Begattungsvolks in eine Vollbeute verursacht werden. Dadurch ist es mithilfe der vorliegenden Erfindung möglich, die Zuchteigenschaften der Königinnen deutlich früher, in der Regel bereits nach sechs bis maximal acht Wochen nach der Begattung, und unter besser kontrollierten Bedingungen als im Stand der Technik zu beurteilen. Auf diese Weise können Königinnen mit vorteilhaften Zuchteigenschaften gezielter und effizienter selektiert und die Qualität des Zuchtmaterials verbessert werden.

In bevorzugten Ausführungsformen weisen die im Innenraum angeordneten Einzel-, Doppel- und/oder Dreifachrähmchen einen Abstand von mindestens 5 Millimetern und/oder höchstens 12 Millimetern, bevorzugt von mindestens 6 Millimetern und/oder höchstens 10 Millimetern zu der Wandung auf. Besonders bevorzugt ist ein Abstand von 7 bis 9 Millimetern. Auf diese Weise wird verhindert, dass die Wabenrähmchen durch die Bienen mit der Wandung verbaut oder verklebt werden, sodass ein schnelles und störungsfreies Übertragen der Wabenrähmchen zwischen den verschiedenen Beuten gewährleistet bleibt. Gleichzeitig werden unnötige Leerräume vermieden, die von den Bienen zusätzlich beheizt werden müssten und dadurch den Wärmehaushalt und die Entwicklung des Bienenvolkes beeinträchtigen können.

In bevorzugten Ausführungsformen weist der Innenraum der Begattungseinheit entlang der Längsachse eine Länge auf, die an die Aufnahme von mindestens drei und/oder höchstens fünf der Einzelrähmchen angepasst ist, wenn diese gemäß obiger Beschreibung in der üblichen Weise vertikal und im Wesentlichen parallel hintereinander entlang der Längsachse des Innenraums angeordnet werden.

In bevorzugten Ausführungsformen weist der Innenraum der Entwicklungseinheit entlang der Längsachse eine Länge auf, die an die Aufnahme von mindestens vier und/oder höchstens acht der Doppelrähmchen angepasst ist, wenn diese in der üblichen Weise vertikal und im Wesentlichen parallel hintereinander entlang der Längsachse des Innenraums angeordnet werden.

In bevorzugten Ausführungsformen weist der Innenraum der Wirtschaftseinheit entlang der Längsachse eine Länge auf, die an die Aufnahme von mindestens sechs und/oder höchstens zwölf der Dreifachrähmchen angepasst ist, wenn diese in der üblichen Weise vertikal und im Wesentlichen parallel hintereinander entlang der Längsachse des Innenraums angeordnet werden.

Der Erfinder hat erkannt, dass diese Ausführungsformen den wachsenden Bienenvölkern in jeder der Einheiten die Einnahme einer ihrem Entwicklungszustand entsprechenden, physiologisch günstigen Kugelform ermöglichen. Auf diese Weise können sich die Bienenvölker insbesondere in der Begattungseinheit und der Entwicklungseinheit optimal entwickeln, sodass die Königinnen mit ihren Völkern deutlich früher als im Stand der Technik üblich, oft schon im Herbst des Begattungsjahres, in die Wirtschaftseinheit umgesiedelt werden können.

In bevorzugten Ausführungsformen weisen die in dem Innenraum direkt hintereinander angeordneten Einzel-, Doppel- und/oder Dreifachrähmchen von Rahmenmittelpunkt zu Rahmenmittelpunkt einen Abstand von mindestens 30 Millimetern und/oder höchstens 40 Millimetern auf. Ein bevorzugter Abstand liegt bei etwa 35 Millimetern. Auf diese Weise können die Bienen einerseits ohne Behinderung beide Waben belaufen und andererseits noch von der einen auf die andere Wabe wechseln; gleichzeitig wird ein Wildbau zwischen den Wabenrähmchen, der eine schnelle und einfache Umsiedelung beeinträchtigen würde, wirksam unterbunden.

Der Innenraum der Begattungseinheit weist vorzugsweise eine Höhe auf, die an die Aufnahme von genau einem vertikal in dem Innenraum angeordneten Einzelrähmchen angepasst ist. Der Innenraum der Entwicklungseinheit weist vorzugsweise eine Höhe auf, die an die Aufnahme von genau einem vertikal in dem Innenraum angeordneten Doppelrähmchen angepasst ist. Der Innenraum der Wirtschaftseinheit weist vorzugsweise eine Höhe auf, die an die Aufnahme von genau einem vertikal in dem Innenraum angeordneten Dreifachrähmchen angepasst ist. Es hat sich gezeigt, dass die Anpassung der Wabenrähmchen an die jeweilige Brutraumhöhe die Entwicklung der Bienenvölker in den jeweiligen Einheiten positiv beeinflusst.

Die erfindungsgemäßen Einzelrähmchen weisen einen Oberträger, einen Unterträger und zwei Seitenleisten auf, die zusammen eine Wabenfläche rahmenförmig umgeben. So, wie der Begriff hier verwendet wird, bedeutet "vertikal" in Bezug auf die Anordnung der Wabenrähmchen im Innenraum, dass der Oberträger zum Deckel, der Unterträger zum Boden und die Seitenleisten jeweils zu einer von zwei sich gegenüberliegenden Seitenwänden der Wandung gerichtet sind, sodass sich die Wabenflächen im Wesentlichen parallel zur Vorder- und Rückwand der Wandung erstrecken. Ober- und Unterträger sind vorzugsweise im Wesentlichen rechtwinklig zu den Seitenleisten angeordnet.

In bevorzugten Ausführungsformen weist der Oberträger an beiden Enden formkorrespondierende Steckverbindungselemente auf, die dazu ausgebildet sind, form- und/oder kraftschlüssig ineinanderzugreifen. Auf diese Weise können die Einzelrähmchen beidenends schnell und einfach mit weiteren Einzelrähmchen zum Doppel- bzw. Dreifachrähmchen erweitert werden, sodass die Handhabungszeit der Wabenrähmchen und die Störung des Bienenvolkes bei der Umsiedlung in die nächstgrößere Einheit auf ein notwendiges Minimum begrenzt werden kann. Diesbezüglich wird auch auf die nachfolgenden Ausführungsbeispiele verwiesen. Selbstverständlich ist es aber auch möglich, die Einzelrähmchen über andere Verbindungsmittel wie z. B. Stifte, Verzapfungen, Klammern oder dergleichen miteinander zu verbinden.

Vorzugsweise weist der Oberträger beidenends Auflageelemente auf, die seitlich über die Seitenleisten hinausragen. Mithilfe der Auflageelemente können die Wabenrähmchen in entsprechende Aufnahmen in der Wandung eingehängt werden. Es ist auch möglich, dass die Steckverbindungselemente gleichzeitig zumindest teilweise als Auflageelemente ausgebildet sind, wie in einer bevorzugten Ausführungsform vorgesehen ist.

In bevorzugten Ausführungsformen weisen die Einzelrähmchen Abstandselemente wie z. B. Vorsprünge, Stege, Stifte oder dergleichen auf, die dazu eingerichtet sind, die im Innenraum hintereinander angeordneten Einzel-, Doppel- und/oder Dreifachrähmchen mindestens 5 Millimeter und/oder höchstens 12 Millimeter, bevorzugt mindestens 6 Millimeter und/oder höchstens 10 Millimeter, besonders bevorzugt etwa 7 Millimeter bis etwa 8 oder 9 Millimeter voneinander zu beabstanden.

In bevorzugten Ausführungsformen weist die Begattungseinheit mehrere separate Innenräume auf, wobei jeder der Innenräume die oben beschriebene Breite aufweist, die an die Aufnahme von genau einem der Einzelrähmchen angepasst ist. Beispielsweise kann die Wandung der Begattungseinheit eine, insbesondere zargenförmige, Außenwandung und eine Innenwandung umfassen, welche den von der Außenwandung umgebenden Raum in separate Innenräume trennt. Vorzugsweise weist die Begattungseinheit mindestens zwei, mindestens drei oder mindestens vier, besonders bevorzugt genau vier separate Innenräume auf. Auf diese Weise lässt sich die Begattungseinheit in der Praxis besonders effizient zur Königinnenzucht nutzen und ermöglicht einen vorteilhaften, direkten Vergleich des Zuchtmaterials.

In bevorzugten Ausführungsformen entspricht das 3/3-Wabenmaß einem Standmaß. Vorzugsweise ist das Standmaß ausgewählt aus der Gruppe bestehend aus Langstroth, Dadant-Blatt, Dadant US, Deutsch-Normalmaß, Schweizermaß und Zandermaß. Dadurch sind alle Komponenten des erfindungsgemäßen Beutensystems von der Königinnenzucht bis zum praxisüblichen Voll- bzw. Wirtschaftsvolk vorteilhaft aufeinander abgestimmt.

Im Übrigen sind die Ausführungsformen der Begattungs-, Entwicklungs- und Wirtschaftseinheit nicht sonderlich beschränkt, sodass diesbezüglich auf den Grundaufbau herkömmlicher Bienenkästen verwiesen werden kann. Boden, Deckel und Wandung sind vorzugsweise aus Holz oder zumindest überwiegend aus Holz gefertigt, aber auch eine Fertigung aus Kunststoffen, insbesondere geschäumtem Polystyrol oder geschäumtem Polyurethan, ist möglich. Es sind sowohl einstückige als auch mehrstückige Ausführungen vorgesehen. Beispielsweise kann die Wandung an den Boden oder an den Deckel angeformt sein.

Vorzugsweise weist die Wandung innenraumseitig eine oder mehrere Aufnahmen auf, beispielsweise in Form von Aussparungen, Rücksprüngen, Vorsprüngen oder Auflagekanten, die sich parallel zur Längsachse entlang der Wandung erstrecken, und zur Aufnahme bzw. zum Einhängen der Wabenrähmchen ausgebildet sind.

Das erfindungsgemäße Beutensystem kann außerdem zusätzliche Einzelrähmchen umfassen, die in dem 2/3-Wabenmaß und/oder dem 3/3-Wabenmaß ausgebildet sind, und auf diese Weise direkt zusammen mit den Doppelrähmchen in die Entwicklungseinheit bzw. zusammen mit den Dreifachrähmchen die Wirtschaftseinheit eingesetzt werden können. Auf diese Weise kann das Umsiedeln der Bienenvölker von der Begattungseinheit in die Entwicklungseinheit bzw. von der Entwicklungseinheit in die Wirtschaftseinheit weiter vereinfacht und beschleunigt werden. Vorzugsweise weisen die Oberträger der zusätzlichen Einzelrähmchen in dem 2/3-Wabenmaß an einem Ende, bevorzugt an beiden Enden, Steckverbindungselemente auf, die mit denjenigen der Einzelrähmchen im 1/3-Wabenmaß korrespondieren, sodass ein Einzelrähmchen in dem 2/3-Wabenmaß mit einem Einzelrähmchen im 1/3-Wabenmaß zu einem zusätzlichen Doppelrähmchen im 3/3-Wabenmaß form- und/oder kraftschlüssig verbunden werden kann.

Weitere Ausführungsformen des modularen Beutensystems sind außerdem aus den nachfolgenden Ausführungsbeispielen ersichtlich.

Ein zweiter Aspekt der Erfindung betrifft ein Verfahren zur Völkerführung bei der Vermehrung eines Bienenvolkes mithilfe eines modularen Beutensystem gemäß dem ersten Aspekt der Erfindung.

Das Verfahren umfasst die folgenden Schritte: A) Bestücken der Begattungseinheit mit mindestens einem der Einzelrähmchen und einer Bienenkönigin oder einer zum Schlupf einer Bienenkönigin geeigneten Weiselzelle und Halten der Bienenkönigin in der Begattungseinheit unter Bedingungen, in denen die Bienenkönigin in Legeleistung geht, um ein Bienenvolk anzuzüchten, das aus Nachkommen der Bienenkönigin besteht,
B) Umsiedeln der Bienenkönigin und zumindest eines Teils des Bienenvolkes aus Schritt A) in die Entwicklungseinheit, wobei das mindestens eine Einzelrähmchen aus der Begattungseinheit mit mindestens einem weiteren der Einzelrähmchen zu mindestens einem der Doppelrähmchen verbunden und in die Entwicklungseinheit überführt wird, und Halten der Bienenkönigin und des Bienenvolkes in der Entwicklungseinheit unter Bedingungen, die zu einer Vermehrung des Bienenvolkes führen,
C) Umsiedeln Bienenkönigin und zumindest eines Teils des Bienenvolkes aus Schritt B) in die Wirtschaftseinheit, wobei das mindestens eine Doppelrähmchen mit mindestens einem weiteren der Einzelrähmchen zu mindestens einem der Dreifachrähmchen verbunden und in die Wirtschaftseinheit überführt wird, und Halten der Bienenkönigin und des Bienenvolkes in der Wirtschaftseinheit unter Bedingungen, die zu einer weiteren Vermehrung des Bienenvolkes führen.

Die Bedingungen, unter denen die Bienenkönigin in Schritt A) in Legeleistung geht, sowie die Bedingungen, unter in den Schritten B) und C) zu einer Vermehrung des Bienenvolkes führen, sind dem Fachmann einschlägig bekannt. In Schritt A) kann die Begattungseinheit beispielsweise mit einem Kunstschwarm bestückt bzw. die Bienenkönigin einem Kunstschwarm zugesetzt werden, wobei der Kunstschwarm z. B. eine Bienenmasse von etwa 500 Gramm bis etwa 1000 Gramm, vorzugsweise etwa 600 Gramm bis etwa 900 Gramm, bevorzugt etwa 700 Gramm bis etwa 800 Gramm umfasst. In Schritt B) und/oder Schritt C) erfolgt das Umsiedeln dagegen bevorzugt unter Ausschluss einer Zuführung von Fremdbienen wie z. B. einem Kunstschwarm, d. h. die Bienenkönigin wird ausschließlich mit dem Bienenvolk bzw. eines Teils davon aus Schritt A) bzw. Schritt B) umgesiedelt, das aus den eigenen Nachkommen der Königin besteht, sowie ggf. der eigenen Brut.

Mithilfe des erfindungsgemäßen Verfahrens lässt sich die zur Beurteilung der Zuchteigenschaften der Königinnen erforderliche Entwicklungszeit des Bienenvolkes um 30-50% gegenüber herkömmlichen Verfahren verkürzen und gleichzeitig der Verlust an Bienenköniginnen regelmäßig auf unter 5%, oft auch unter 3% oder unter 1%, reduzieren.

Aufgrund der verbesserten Kontrolle über die Zuchtbedingungen lassen sich die Zuchteigenschaften der Königinnen einfacher beurteilen und ermöglichen eine zuverlässigere Selektion von Königinnen, die kräftige und widerstandsfähige Bienenvölker mit leistungsfähigen und langlebigen Arbeiterbienen hervorbringen.

Eine fundierte Beurteilung der Zuchteigenschaften und/oder eine Selektion kann in dem erfindungsgemäßen Verfahren vorteilhafter Weise in Schritt A) und/oder in Schritt B) erfolgen.

In bevorzugten Ausführungsformen ist die Begattungseinheit in Schritt A) mit mindestens drei der Einzelrähmchen bestückt. Wie bereits oben dargelegt wurde, kann das Bienenvolk dadurch eine physiologisch günstige Kugelform ausbilden, wodurch sich höhere Entwicklungsraten erreichen lassen. Dementsprechend werden in Schritt B) die mindestens drei Einzelrähmchen zu mindestens drei Doppelrähmchen und in Schritt C) die mindestens drei Doppelrähmchen zu mindestens drei Dreifachrähmchen miteinander verbunden und in die Entwicklungseinheit bzw. in die Wirtschaftseinheit überführt. Vorzugsweise werden in Schritt B) mindestens ein oder zwei zusätzliche Wabenrähmchen im 2/3-Wabenmaß in die Entwicklungseinheit und in Schritt C) mindestens drei oder vier zusätzliche Wabenrähmchen im 3/3-Wabenmaß in die Wirtschaftseinheit eingesetzt.

Ein dritter Aspekt der Erfindung betrifft ein Verfahren zur Gewinnung von Bienenprodukten. Das Verfahren umfasst die folgenden Schritte: a) Durchführen eines Verfahrens gemäß dem zweiten Aspekt der Erfindung, um ein Bienenvolk bereitzustellen, b) Halten des Bienenvolkes unter Bedingungen, unter denen das Bienenvolk Bienenprodukte erzeugt, c) Entnehmen von Bienenprodukten, die von dem Bienenvolk in Schritt b) erzeugt wurden. Mit Vorteil wird das Bienenvolk in Schritt b) in der Wirtschaftseinheit gehalten.

Die Bedingungen, unter denen das Bienenvolk in Schritt b) Bienenprodukte erzeugt, sind dem Fachmann einschlägig bekannt.

Mithilfe des Verfahrens lassen sich hochwertige Produktionsvölker bereitstellen, die eine zeit- und kosteneffiziente Gewinnung von Bienenprodukten wie z. B. Honig und/oder Bienenwachs gewährleisten. So, wie der Begriff hier verwendet wird, schließen Bienenprodukte auch Bienen und Bienenköniginnen mit ein.

Ein vierter Aspekt der Erfindung betrifft einen Bausatz für ein modulares Beutensystem gemäß dem ersten Aspekt. Der Bausatz enthält Bauteile, die zur Herstellung der Begattungseinheit, der Entwicklungseinheit und/oder der Wirtschaftseinheit konfiguriert sind. Vorzugsweise enthält der Bausatz zusätzlich Bauteile, die zur Herstellung der Einzelrähmchen konfiguriert sind. Weiterhin kann der Bausatz eine Anleitung zur Herstellung der Begattungseinheit, der Entwicklungseinheit, der Wirtschaftseinheit und/oder der Einzelrähmchen enthalten.

Schließlich betrifft ein fünfter Aspekt der Erfindung eine Verwendung eines Bausatzes gemäß dem vierten Aspekt oder eines Teils davon zur Herstellung eines modularen Beutensystems gemäß dem ersten Aspekt oder zur Durchführung eines Verfahrens gemäß dem zweiten oder dritten Aspekt.

Es versteht sich, dass sich die verschiedenen Ausführungsformen und Vorteile des ersten Erfindungsaspektes, soweit anwendbar, auch auf die übrigen Erfindungsaspekte beziehen können. Merkmale, die vorstehend und im Folgenden im Zusammenhang mit dem modularen Beutensystem offenbart sind, können sich daher auch auf das Verfahren zur Völkerführung und das Verfahren zur Gewinnung von Bienenprodukten sowie den Bausatz und dessen Verwendung beziehen und umgekehrt.

### Kurze Beschreibung der Figuren

Die Erfindung wird im Folgenden anhand bevorzugter Ausführungsformen unter Bezugnahme auf die beigefügten Figuren näher erläutert. Diese stellen lediglich schematische und nicht notwendigerweise maßstabsgetreue Prinzipdarstellungen dar und sind nur beispielhaft zu verstehen. Keinesfalls soll die Erfindung auf die gezeigten Figuren beschränkt sein. Gleiche oder analoge Merkmale sind mit den gleichen Bezugszeichen versehen, wobei aus Gründen der Übersichtlichkeit wiederkehrende Merkmale mitunter nicht mehrfach mit einem Bezugszeichen versehen sind. Es zeigen:
- Fig. 1: eine perspektivische Ansicht einer Ausführungsform der erfindungsgemäßen Begattungseinheit mit mehreren Einzelrähmchen;
- Fig. 2: eine bemaßte Front- und Seitenansicht des Bodens der Begattungseinheit aus Fig. 1;
- Fig. 3: eine bemaßte Front-, Drauf- und Seitenansicht der Vorder- bzw. Rückwand der Begattungseinheit aus Fig. 1;
- Fig. 4: eine bemaßte Front- und Seitenansicht des Mittelwandteils der Begattungseinheit aus Fig. 1;
- Fig. 5: eine bemaßte Front- und Seitenansicht der Trennwand der Begattungseinheit aus Fig. 1;
- Fig. 6: eine bemaßte Front- und Seitenansicht der Seitenwände der Begattungseinheit aus Fig. 1;
- Fig. 7: eine bemaßte Front-, Seiten- und Draufsicht sowie eine perspektivische Ansicht einer Ausführungsform eines erfindungsgemäßen Einzelrähmchens im 1/3-Wabenformat;
- Fig. 8: eine perspektivische Ansicht von Einzelrähmchen aus Fig. 7, die zu einem erfindungsgemäßen Doppelrähmchen im 2/3-Wabenformat und zu einem erfindungsgemäßen Dreifachrähmchen im 3/3-Wabenformat miteinander verbunden sind;
- Fig. 9: eine perspektivische Ansicht einer Ausführungsform der erfindungsgemäßen Entwicklungseinheit sowie deren bemaßte Front- und Seitenansichten;
- Fig. 10: eine bemaßte Front-, Seiten- und Draufsicht sowie eine perspektivische Ansicht einer Ausführungsform eines erfindungsgemäßen Einzelrähmchens im 2/3-Wabenformat
- Fig. 11: eine perspektivische Ansicht des Einzelrähmchens im 2/3-Wabenformat aus Fig. 10, das mit einem Einzelrähmchen im 1/3-Wabenformat aus Fig. 7 zu einem erfindungsgemäßen Doppelrähmchen im 3/3-Wabenformat verbunden ist.

### Detaillierte Beschreibung von Ausführungsbeispielen

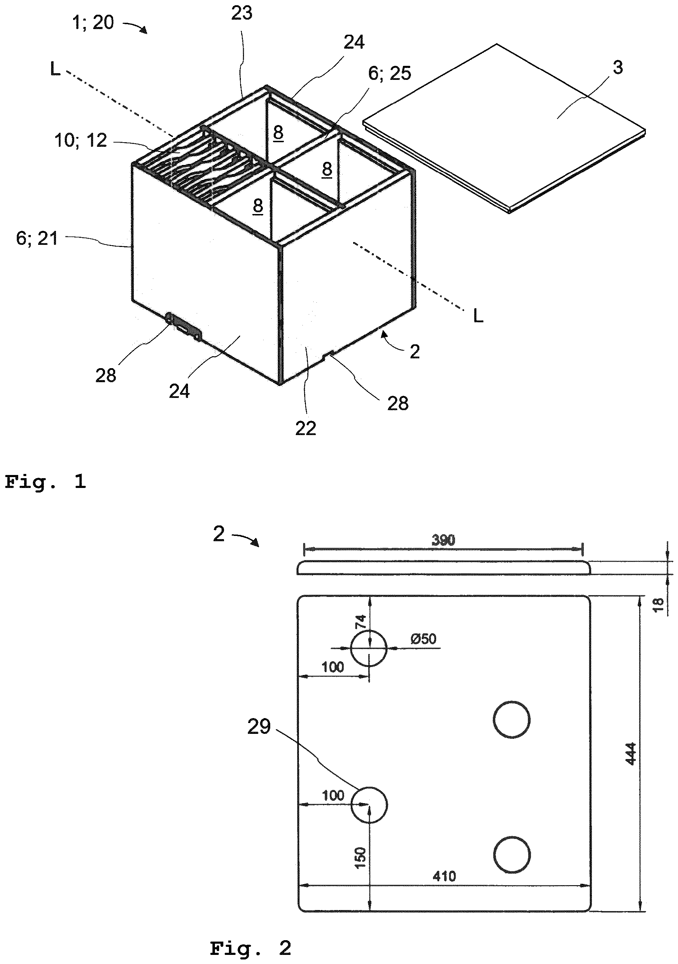

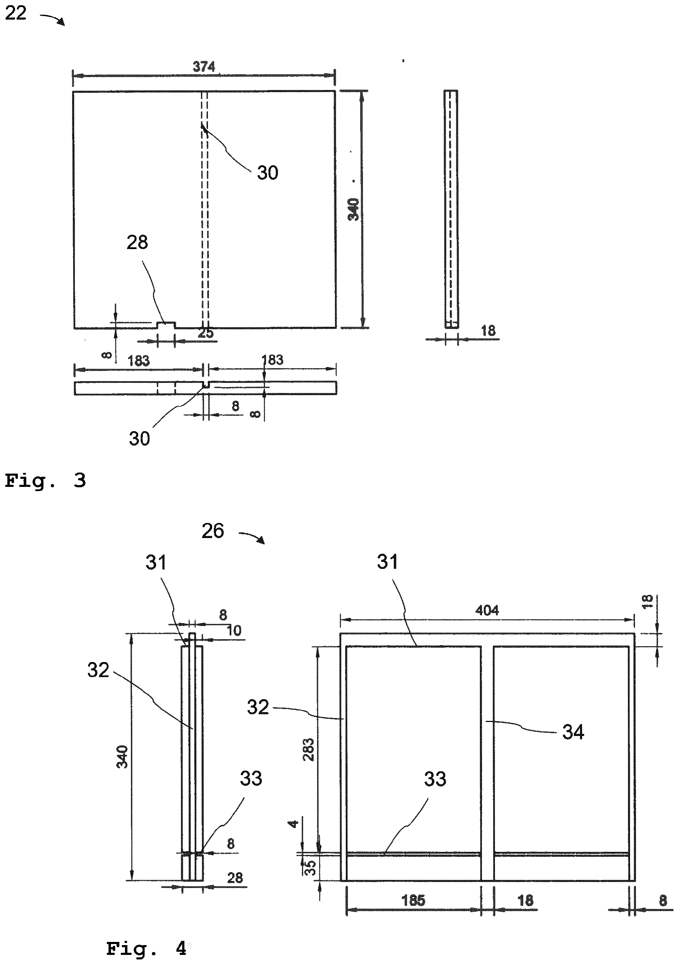

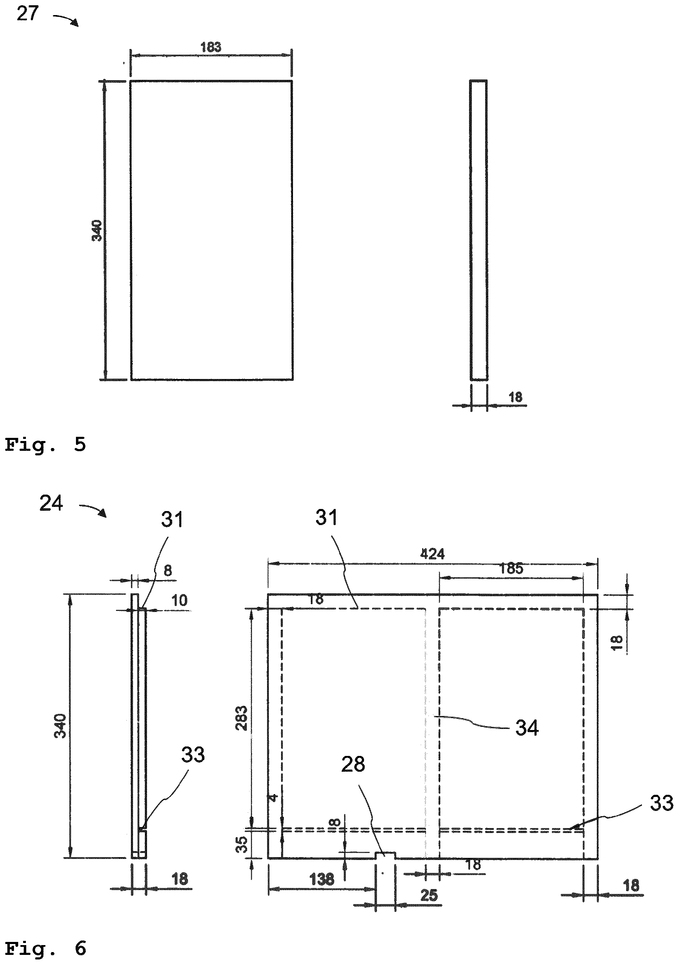

Fig. 1 zeigt eine Beute 1 des erfindungsgemäßen Beutensystems, die als Begattungseinheit 20 ausgeführt ist, mit einem Boden 2, einem Deckel 3 (hier im geöffneten Zustand dargestellt) und einer zwischen dem Boden 2 und dem Deckel 4 angeordneten Wandung 6, die im gezeigten Beispiel aus einer zargenförmigen Außenwandung 21 und einer innerhalb der Außenwandung 21 angeordneten Innenwandung 25 besteht. Auf diese Weise umgibt die Wandung 6 vier separate Innenräume 8 zur Aufnahme von Wabenrähmchen 10, die als Einzelrähmchen 12 in dem 1/3-Wabenmaß ausgebildet sind. In einem der Innenräume 8 sind exemplarisch fünf der Einzelrähmchen 12 vertikal und im Wesentlichen parallel hintereinander entlang der Längsachse L des Innenraums 8 angeordnet. Hierbei ist ersichtlich, dass der Innenraum 8 der Begattungseinheit 20 quer zur Längsachse L eine Breite aufweist, die zur Aufnahme von genau einem der Einzelrähmchen 12 ausgebildet ist, d. h. der Innenraum 8 kann in der Breite nicht mehr als eines der Einzelrähmchen 12 aufnehmen. Die Vorderwand 22, Rückwand 23 und beide Seitenwände 24 weisen in Bodennähe jeweils eine rechteckige Durchgangsöffnung 28 auf, die den Bienen als Ein- und Ausgang, auch als Flugloch bezeichnet, zu jeweils einem der Innenräume 8 dient. Diesbezüglich wird ergänzend auf die Fig. 3 und 6 verwiesen.

In Fig. 2 ist der Boden 2 der Begattungseinheit 20 aus Fig. 1 in einer Seitenansicht (oben) und einer Draufsicht (unten) näher dargestellt. Der Boden 2 weist im gezeigten Beispiel an der Vorder- und Rückseite eine Breite von 410 Millimetern und an den Seiten eine Länge von 444 Millimetern auf. Die Dicke des Bodens beträgt 18 Millimeter. Vier Durchgangsbohrungen 29 im Boden mit einem Durchmesser von jeweils 50 Millimetern gewährleisten eine ausreichende Belüftung der darüber angeordneten Innenräume 8.

In Fig. 3 ist die Vorderwand 22 der zargenförmigen Außenwandung 21 der Begattungseinheit 20 aus Fig. 1 in einer Frontansicht (links oben), einer Draufsicht (links unten) und einer Seitenansicht (rechts) dargestellt. Die Rückwand 23 der zargenförmigen Außenwandung 21 ist entsprechend der Vorderwand 22 ausgebildet. Die Vorderwand 22 weist im gezeigten Beispiel eine Breite von 374 Millimetern und eine Höhe von 340 Millimetern bei einer Wandstärke von 18 Millimetern auf. Eine Durchgangsöffnung 28 in Form einer 25 Millimeter breiten und 8 Millimeter hohen Aussparung an der Unterkante der Vorderwand 22 bildet den Ein- und Ausgang zum Innenraum 8. Eine nach innen offene Mittelnut 30 mit einer Breite und Tiefe von jeweils 8 Millimetern dient zur Aufnahme eines Mittelwandteils 26 der Innenwandung 25, der in Fig. 4 in einer Seitenansicht (links) und einer Frontansicht (rechts) näher dargestellt ist.

Der Mittelwandteil 26 weist eine Länge von 404 Millimetern, eine Höhe von 340 Millimetern und eine Wandstärke von 28 Millimetern auf. Fig. 4 zeigt, dass der Mittelwandteil 26 beidseits der oberen und seitlichen Außenkanten umlaufend 10 Millimeter tief ausgefräst ist, sodass sich eine Auflagekante 31 zur Auflage der Einzelwabenrähmchen 12 in einem Abstand von 18 Millimetern beidseits entlang der oberen Außenkante erstreckt. Die seitlichen Außenkanten bilden durch die Ausfräsung eine 8 Millimeter starke Feder 32, die zur Aufnahme in die Mittelwandnut 30 der Vorder- und Rückwand 22, 23 (vgl. Fig. 3) vorgesehen ist. In einer Höhe von 35 Millimetern über der Unterkante erstreckt sich parallel zur Unterkante ein 4 Millimeter hoher und 8 Millimeter tiefer Aufnahmespalt 33, in den ein Drohnenabsperrgitter (hier nicht dargestellt) eingeschoben werden kann. In der Mitte des Mittelwandteils 26 erstreckt sich auf beiden Seiten zwischen Ober- und Unterkante eine 18 Millimeter breite und 8 Millimeter tiefe Trennwandnut 34. Die Trennwandnut 34 ist zur Aufnahme eines Trennwandteils 27 mit einer Höhe von 340 Millimetern, einer Breite von 183 Millimetern und einer Wandstärke von 18 Millimetern ausgebildet, das in Fig. 5 in einer Frontansicht (links) und einer Seitenansicht (rechts) gezeigt ist. Der Mittelwandteil 26 wird mit zwei Trennwandteilen 27 zur Innenwandung 25 zusammengesetzt, die in Fig. 1 gezeigt ist.

Fig. 6 zeigt schließlich eine exemplarische Seitenwand 24 in Seitenansicht (links) und Frontansicht (rechts). Die Seitenwand 24 weist eine Länge von 424 Millimetern, eine Höhe von 340 Millimetern und eine Wandstärke von 18 Millimetern auf. Entlang der oberen Außenkante ist die Seitenwand 24 innenseitig 10 Millimeter tief ausgefräst, sodass sich eine Auflagekante 31 zur Auflage der Einzelwabenrähmchen 12 in einem Abstand von 18 Millimetern entlang der oberen Außenkante erstreckt. Wie aus Fig. 1 ersichtlich ist, werden die Einzelwabenrähmchen 12 beim Anordnen im Innenraum 8 auf den gegenüberliegenden Auflagekanten 31 der Seitenwand 24 und des Mittelwandteils 26 gelagert. Passfähig zur gegenüberliegenden Seite des Mittelwandteils 26 weist auch die Seitenwand 24 innenseitig den Aufnahmespalt 33 für ein Drohnenabsperrgitter und die Trennwandnut 34 auf. Analog zur Vorder- und Rückwand 22, 23 ist an der Unterkante eine Durchgangsöffnung 28 als Ein- und Ausgang zum Innenraum 8 ausgebildet.

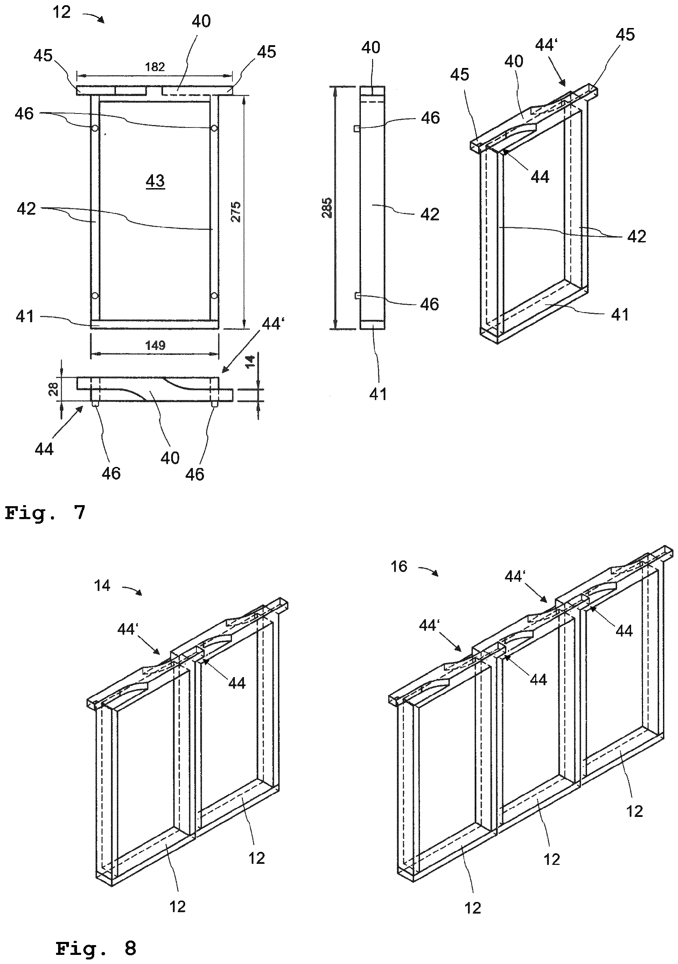

Fig. 7 zeigt eine Frontansicht (oben links), Seitenansicht (oben Mitte) und Draufsicht (unten) sowie eine perspektivische Ansicht (oben rechts) einer Ausführungsform eines erfindungsgemäßen Einzelrähmchens 12 im 1/3-Wabenformat. Das Einzelrähmchen 12 ist aus einem Oberträger 40, einem Unterträger 41 und zwei Seitenleisten 42 aufgebaut, die im Wesentlichen rechtwinklig zueinander angeordnet sind und eine Wabenfläche 43 rahmenförmig umgeben. Der Oberträger 40 weist an beiden Enden formkorrespondierende Steckverbindungselemente 44, 44` auf, die so ausgebildet sind, dass sie miteinander in Eingriff gebracht werden können, um mehrere der Einzelrähmchen 12 fluchtend entlang der Oberträger 40 form- und/oder kraftschlüssig miteinander zu verbinden. Der Oberträger 40 ragt mit einem Teil der Steckverbindungselemente 44, 44` an beiden Enden jeweils 33 Millimeter über die Seitenleisten 42 hinaus, sodass Auflageelemente 45 zur Lagerung der Einzelrähmchen 12 auf den Auflagekanten 31 der Seiten- und Mittelwände 24, 26 der Begattungseinheit 20 (vgl. Fig. 4 und 6) ausgebildet werden. Auf den Seitenleisten 42 sind einseitig mehrere stiftförmige Abstandselemente 46 angeordnet, die dazu eingerichtet sind, hintereinander angeordnete Einzelrähmchen 12 jeweils 8 Millimeter voneinander zu beabstanden. Das 1/3-Wabenmaß der Einzelrähmchen 12 weist eine Höhe von 275 Millimetern bzw. 285 Millimetern über einer Breite von 149 Millimetern auf, sodass das Einzelrähmchen 12 im Innenraum 8 der Begattungseinheit 20 einen Abstand von etwa 8- Millimetern zur Wandung 6 aufweist.

Fig. 8 zeigt zwei der Einzelrähmchen 12 aus Fig. 7, die über die Steckverbindungselemente 44, 44' miteinander zu einem erfindungsgemäßen Doppelrähmchen 14 im 2/3-Wabenformat verbunden sind (links), sowie drei der Einzelrähmchen 12 aus Fig. 7, die über die Steckverbindungselemente 44, 44` miteinander zu einem erfindungsgemäßen Dreifachrähmchen 16 im 3/3-Wabenformat verbunden sind (rechts).

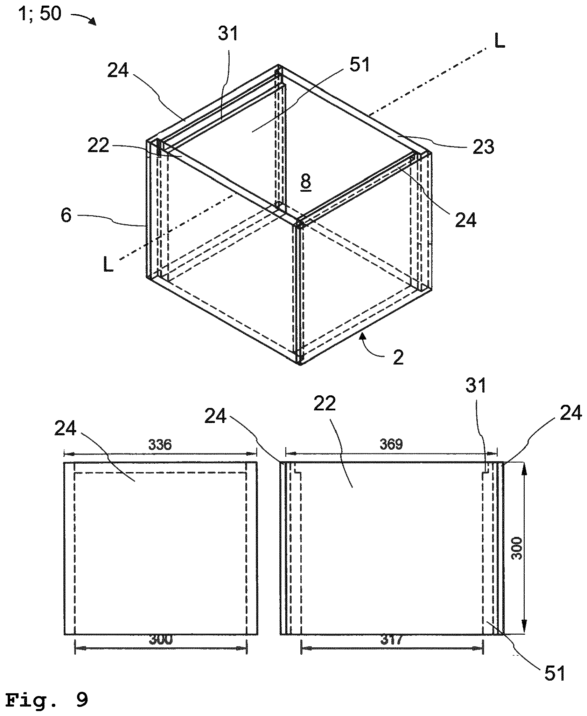

In Fig. 9 ist eine perspektivische Ansicht (oben) sowie eine zugehörige Seitenansicht (unten links) und Frontansicht (unten rechts) eines Ausführungsbeispiels für eine erfindungsgemäße Entwicklungseinheit 50 gezeigt. Die Entwicklungseinheit 50 umfasst einen Boden 2, einen in Figur 9 nicht dargestellten Deckel 3 und eine zargenförmige Wandung 6, die den Innenraum 8 zur Aufnahme von Wabenrähmchen 10 (in Fig. 9 nicht dargestellt) umgibt. Die Wandung 6 wird durch Vorder- und Rückwand 22, 23 mit einer Breite von jeweils 369 Millimetern und einer Höhe von 300 Millimetern sowie die beiden Seitenwände 24 mit einer Breite von jeweils 336 Millimetern und einer Höhe von 300 Millimetern gebildet. Auf den zum Innenraum 8 gewandten Innenseiten der Seitenwände 24 ist jeweils ein Innenwandteil 51 angeordnet, das innenraumseitig entlang seiner Oberkante einen Rücksprung, beispielsweise eine Ausfräsung, aufweist, der Auflagekanten 31 zur Lagerung der Wabenrähmchen 10 bildet. Der Innenraum 8 weist dadurch eine Breite von 317 Millimetern auf, die an die Aufnahme des Doppelrähmchens 14 im 2/3-Wabenformat aus Fig. 8 angepasst ist.

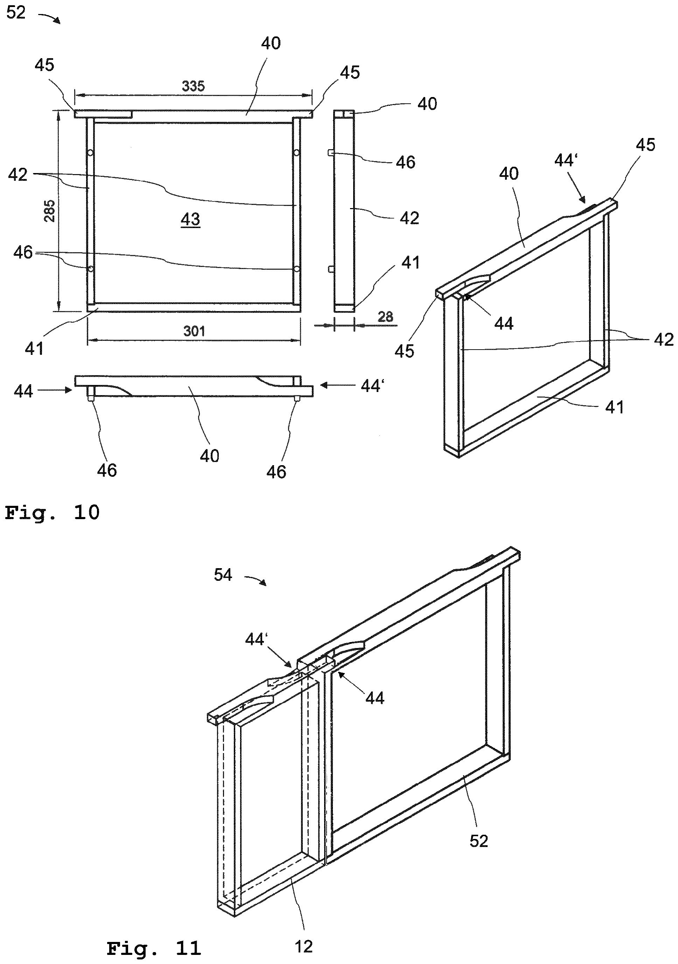

Fig. 10 zeigt eine Frontansicht (oben links), Seitenansicht (oben Mitte) und Draufsicht (unten) sowie eine perspektivische Ansicht (rechts) einer Ausführungsform eines erfindungsgemäßen weiteren Einzelrähmchens 52 im 2/3-Wabenformat. Der grundsätzliche Aufbau entspricht demjenigen des Einzelrähmchens 12, sodass diesbezüglich auf die obigen Ausführungen zu Fig. 7 verwiesen werden kann. Das 2/3-Wabenmaß des Einzelrähmchens 52 weist eine Höhe von 285 Millimetern über einer Breite von 301 Millimetern auf und ist somit doppelt so groß wie das 1/3-Wabenmaß des Einzelrähmchens 12 bzw. entspricht dem 2/3-Wabenmaß des Doppelrähmchens 14. Im Innenraum 8 der Entwicklungseinheit 50 angeordnet weist das Einzelrähmchen 52 einen Abstand von etwa 8 Millimetern zur Wandung 6 auf. Die Steckverbindungselemente 44, 44` des Oberträgers 40 des Einzelrähmchens 52 korrespondieren mit denjenigen des Einzelrähmchens 12, sodass Einzelrähmchen 52 und Einzelrähmchen 12, wie in Fig. 11 gezeigt, form- und/oder kraftschlüssig miteinander zu einer weiteren Ausführung eines Doppelrähmchens 54 verbunden werden können, das wiederum ein 3/3-Wabenformat aufweist.

In den gezeigten Beispielen entspricht das 3/3-Wabenformat dem Standmaß Dadant US. Als Wirtschaftseinheit (60), hier nicht gezeigt, kann demzufolge eine herkömmliche Dadant US Beute verwendet werden. Es versteht sich, dass die für die Erfindung wesentliche Drittelteilung der Wabenrähmchen (10) und die entsprechende Anpassung der Begattungs- (20) und Entwicklungseinheit (50) hinsichtlich der Breite und/oder Höhe des Innenraums 8 aber entsprechend auch auf jedes andere Standmaß anwendbar ist, um die Wirkung der vorliegenden Erfindung zu erzielen und die sich daraus ergebenden Vorteile zu nutzen.

Mithilfe des beschriebenen Beutensystems ist es möglich, die Entwicklungszeit neuer Bienenvölker von der begatteten Königin bis zum Wirtschaftsvolk deutlich, in der Regel um 30-50%, bei gleichzeitig geringerer Verlustrate gegenüber herkömmlichen Beutensystemen zu verkürzen. Gleichzeitig wird eine frühere und zuverlässigere Beurteilung der Zuchteigenschaften einer Königin und eine gezieltere Selektion vorteilhaften Zuchtmaterials ermöglicht, wodurch sich die Effizienz und Qualität der Züchtung grundsätzlich verbessert. Darüber hinaus führt das dreistufige Beutensystem zu einer verbesserten Kontrolle des Züchtungszyklus durch einen Imker, die es erlaubt, die Umsiedlung von Königinnen mit ihren wachsenden Bienenvölkern in die jeweils nächstgrößere Einheit des Systems in Zeiten des Jahres zu verlegen, in denen ein geringerer imkereilicher Arbeitsdruck herrscht, d. h. insbesondere in Zeiten außerhalb der Honigernte. Auf diese Weise trägt das erfindungsgemäße Beutensystem auch zur Erhöhung der Arbeitseffizienz in der Imkerpraxis bei.

Diese Vorteile sind für den Fachmann nicht zu erwarten gewesen.

Die Erfindung ist nicht durch die Beschreibung anhand der Ausführungsbeispiele auf diese beschränkt. Vielmehr umfasst die Erfindung jedes neue Merkmal sowie jede Kombination von Merkmalen, dass insbesondere jede Kombination von Merkmalen in den Patentansprüchen beinhaltet, auch wenn dieses Merkmal oder diese Kombination von Merkmalen selbst nicht explizit in den Patentansprüchen oder Ausführungsbeispielen angegeben ist.

### Bezugszeichenliste

- 1: Beute (Bienenkasten)
- 2: Boden
- 3: Deckel
- 6: Wandung
- 8: Innenraum
- 10: Wabenrähmchen
- 12: Einzelrähmchen im 1/3-Wabenformat
- 14: Doppelrähmchen im 2/3-Wabenformat
- 16: Dreifachrähmchen im 3/3-Wabenformat
- 20: Begattungseinheit
- 21: Außenwandung
- 22: Vorderwand
- 23: Rückwand
- 24: Seitenwand
- 25: Innenwandung
- 26: Mittelwandteil
- 27: Trennwandteil
- 28: Durchgangsöffnung (Flugloch)
- 29: Durchgangsbohrung
- 30: Mittelwandnut
- 31: Auflagekante
- 32: Feder
- 33: Aufnahmespalt
- 34: Trennwandnut
- 40: Oberträger
- 41: Unterträger
- 42: Seitenleisten
- 43: Wabenfläche
- 44, 44`: Steckverbindungselemente
- 45: Auflageelement
- 46: Abstandselement
- 50: Entwicklungseinheit
- 51: Innenwandteil
- 52: Einzelrähmchen im 2/3-Wabenmaß
- 54: Doppelrähmchen im 3/3-Wabenmaß
- 60: Wirtschaftseinheit
- L: Längsachse

## Patentansprüche

1. Ein modulares Beutensystem zur Entwicklung und Führung eines Bienenvolkes, umfassend
eine Mehrzahl von Beuten (1) mit jeweils einem Boden (2), einem Deckel (3) und einer zwischen dem Boden (2) und dem Deckel (3) angeordneten Wandung (6), die einen Innenraum (8) zur Aufnahme von Wabenrähmchen (10) rahmenförmig umgibt, wobei die Wabenrähmchen (10) in dem Innenraum (8) vertikal und im Wesentlichen parallel hintereinander entlang einer Längsachse (L) des Innenraums (8) angeordnet werden, und
eine Mehrzahl von Wabenrähmchen (10) zum Ausbau einer Bienenwabe, wobei zumindest ein Teil der Wabenrähmchen (10) miteinander verbunden und/oder verbindbar ist, um ein oder mehrere Mehrfachrähmchen (14, 16) mit einem vergrößerten Wabenmaß zu bilden, **dadurch gekennzeichnet, dass** die Wabenrähmchen (10) mehrere Einzelrähmchen (12) umfassen, die ein 1/3-Wabenmaß aufweisen, sodass jeweils zwei der Einzelrähmchen (12) zu einem Doppelrähmchen (14) mit einem 2/3-Wabenmaß und jeweils drei der Einzelrähmchen (12) zu einem Dreifachrähmchen (16) mit einem 3/3-Wabenmaß miteinander verbunden und/oder verbindbar sind, und
die Beuten (1) eine Begattungseinheit (20), eine Entwicklungseinheit (50) und eine Wirtschaftseinheit (60) umfassen, deren Innenraum (8) quer zur Längsachse (L) eine Breite aufweist, die bei der Begattungseinheit (20) an die Aufnahme von genau einem der Einzelrähmchen (12), bei der Entwicklungseinheit (50) an die Aufnahme von genau zwei der Einzelrähmchen (12), die zu dem Doppelrähmchen (14) verbunden sind, und bei der Wirtschaftseinheit (60) an die Aufnahme von genau drei der Einzelrähmchen (12), die zu dem Dreifachrähmchen (16) verbunden sind, angepasst ist.

2. Das modulare Beutensystem nach Anspruch 1, **dadurch gekennzeichnet, dass** die in dem Innenraum (8) angeordneten Einzelrähmchen (12), Doppelrähmchen (14) und/oder Dreifachrähmchen (16) einen Abstand von mindestens 6 Millimetern und höchstens 10 Millimetern zu der Wandung (6) aufweisen.

3. Das modulare Beutensystem nach einem der Ansprüche 1 oder 2, **dadurch gekennzeichnet, dass** der Innenraum (8) entlang der Längsachse (L) eine Länge aufweist, die bei
der Begattungseinheit (20) an die Aufnahme von mindestens drei und/oder höchstens fünf der Einzelrähmchen (12),
der Entwicklungseinheit (50) an die Aufnahme von mindestens vier und/oder höchstens acht der Doppelrähmchen (14), und/oder
der Wirtschaftseinheit (60) an die Aufnahme von mindestens sechs und/oder höchstens zwölf der Dreifachrähmchen (16) angepasst ist.

4. Das modulare Beutensystem nach Anspruch 3, **dadurch gekennzeichnet, dass** die in dem Innenraum (8) direkt hintereinander angeordneten Einzel- (12), Doppel- (14) und/oder Dreifachrähmchen (16) von Rahmenmittelpunkt zu Rahmenmittelpunkt einen Abstand von mindestens 30 Millimetern und höchstens 40 Millimetern aufweisen.

5. Das modulare Beutensystem nach einem der Ansprüche 1 bis 4, **dadurch gekennzeichnet, dass** der Innenraum (8) eine Höhe aufweist, die bei
der Begattungseinheit (20) an die Aufnahme von genau einem aufrecht in dem Innenraum (8) angeordneten Einzelrähmchen (12),
der Entwicklungseinheit (50) an die Aufnahme von genau einem aufrecht in dem Innenraum (8) angeordneten Doppelrähmchen (14) und/oder
der Wirtschaftseinheit (60) an die Aufnahme von genau einem aufrecht in dem Innenraum (8) angeordneten Dreifachrähmchen (16) ausgebildet ist.

6. Das modulare Beutensystem nach einem der Ansprüche 1 bis 5, **dadurch gekennzeichnet, dass** die Einzelrähmchen (12) einen Oberträger (40), einen Unterträger (41) und zwei Seitenleisten (42) aufweisen, die zusammen eine Wabenfläche (43) umgeben, wobei der Oberträger (40) an beiden Enden formkorrespondierende Steckverbindungselemente (41, 41`) aufweist, die dazu ausgebildet sind, form- und/oder kraftschlüssig ineinanderzugreifen.

7. Das modulare Beutensystem nach einem der Ansprüche 1 bis 6, **dadurch gekennzeichnet, dass** die Einzelrähmchen (12) Abstandselemente (46) aufweisen, die dazu eingerichtet sind, im Innenraum (8) parallel hintereinander angeordnete Einzel-(12), Doppel- (14) und/oder Dreifachrähmchen (16) mindestens 6 Millimeter und höchstens 10 Millimeter voneinander zu beabstanden.

8. Das modulare Beutensystem nach einem der Ansprüche 1 bis 7, **dadurch gekennzeichnet, dass** die Begattungseinheit (20) vier separate Innenräume (8) aufweist, wobei jeder der Innenräume (8) die Breite aufweist, die an die Aufnahme von genau einem der Einzelrähmchen (12) angepasst ist.

9. Das modulare Beutensystem nach einem der Ansprüche 1 bis 8, **dadurch gekennzeichnet, dass** das 3/3-Wabenmaß einem Standmaß ausgewählt aus der Gruppe bestehend aus Langstroth, Dadant-Blatt, Dadant US, Deutsch-Normalmaß, Schweizermaß und Zandermaß entspricht.

10. Ein Verfahren zur Völkerführung bei der Vermehrung eines Bienenvolkes mithilfe eines modularen Beutensystems nach einem der Ansprüche 1 bis 9 mit den Schritten
A) Bestücken der Begattungseinheit (20) mit mindestens einem der Einzelrähmchen (12) und einer Bienenkönigin oder einer zum Schlupf einer Bienenkönigin geeigneten Weiselzelle und Halten der Bienenkönigin in der Begattungseinheit (12) unter Bedingungen, in denen die Bienenkönigin in Legeleistung geht, um ein Bienenvolk anzuzüchten,
B) Umsiedeln der Bienenkönigin und zumindest eines Teils des Bienenvolkes aus Schritt A) in die Entwicklungseinheit (50), wobei das mindestens eine Einzelrähmchen (12) aus der Begattungseinheit (20) mit mindestens einem weiteren der Einzelrähmchen (12) zu mindestens einem der Doppelrähmchen (14) verbunden und in die Entwicklungseinheit (50) überführt wird, und Halten der Bienenkönigin und des Bienenvolkes in der Entwicklungseinheit (50) unter Bedingungen, die zu einer Vermehrung des Bienenvolkes führen,
C) Umsiedeln Bienenkönigin und des Bienenvolkes aus Schritt B) in die Wirtschaftseinheit (60), wobei das mindestens eine Doppelrähmchen (14) mit mindestens einem weiteren der Einzelrähmchen (12) zu mindestens einem der Dreifachrähmchen (16) verbunden und in die Wirtschaftseinheit (60) überführt wird, und Halten der Bienenkönigin und des Bienenvolkes in der Wirtschaftseinheit (60) unter Bedingungen, die zu einer weiteren Vermehrung des Bienenvolkes führen.

11. Ein Verfahren zur Gewinnung von Bienenprodukten mit den Schritten
a) Bereitstellen eines Bienenvolkes mithilfe eines Verfahrens nach Anspruch 10,
b) Halten des Bienenvolkes unter Bedingungen, in denen das Bienenvolk Bienenprodukte erzeugt,
c) Entnehmen von Bienenprodukten aus dem Bienenvolk, die in Schritt b) erzeugt wurden.

12. Ein Bausatz für ein modulares Beutensystem nach einem der Ansprüche 1 bis 9 oder eines Teils davon, umfassend
Bauteile, die dazu eingerichtet sind, das Begattungsmodul (20), das Entwicklungsmodul (50) und/oder das Wirtschaftsmodul (60) herzustellen, und
Bauteile, die dazu eingerichtet sind, die Einzelrähmchen (12) herzustellen.

13. Eine Verwendung eines Bausatzes nach Anspruch 12 oder eines Teils davon zur Herstellung eines modularen Beutensystems nach einem der Ansprüche 1 bis 9 oder zur Durchführung eines Verfahrens nach Anspruch 10 oder 11.
